Europäisches Patentamt

European Patent Office

Office européen des brevets

(19)

(11) Veröffentlichungsnummer: **0 081 778**
**B1**

(12) # EUROPÄISCHE PATENTSCHRIFT

(45) Veröffentlichungstag der Patentschrift:
19.03.86

(51) Int. Cl.⁴: **G 21 C 1/06**

(21) Anmeldenummer: 82111242.2

(22) Anmeldetag: 04.12.82

(54) **Kugelhaufen-Kernreaktor mit passiver Selbststabilisierung im Schadensfall.**

(30) Priorität: 16.12.81 DE 3149794

(43) Veröffentlichungstag der Anmeldung:
22.06.83 Patentblatt 83/25

(45) Bekanntmachung des Hinweises auf die Patenterteilung:
19.03.86 Patentblatt 86/12

(84) Benannte Vertragsstaaten:
FR GB IT

(56) Entgegenhaltungen:
FR - A - 2 008 029
FR - E - 80 481
GB - A - 821 607
GB - A - 1 135 396
LU - A - 59 221

(73) Patentinhaber: **Kernforschungsanlage Jülich
Gesellschaft mit beschränkter Haftung, Postfach 1913,
D-5170 Jülich 1 (DE)**

(72) Erfinder: **Zhong, Wang Da Inst.of Nuclear Energy Techn.,
Tshinghua University P.O. Box 1021, Beijing (CN)**

## Beschreibung

Die Erfindung bezieht sich auf einen Hochtemperatur-Kernreaktor mit kugelförmigen Brennelementen, die etwa ringförmig um einen Graphitkern angeordnet sind, der durch eine Schüttung von Graphitkugeln gebildet ist.

Ein solcher Kugelhaufen-Kernreaktor ist aus der LU-A-59 221 bekannt, bei dem eine aus Graphitkugeln gebildete Zone innerhalb des Cores zur Aufnahme der Abschalt- und Regelstäbe dient, so daß eine Beschädigung der Brennstoffelemente vermieden wird.

Bei Kugelhaufen-Kernreaktoren kleinerer Leistung kann man eine "passive Selbststabilisierung" im Schadensfall erreichen, was bedeutet, daß beim Ausfall aller aktiven Kühlsysteme und Druckentlastung eine (zur Verhinderung der Spaltproduktfreisetzung nicht zu überschreitende) Temperaturgrenze von 1600 °C durch natürliche Wärmeabführung eingehalten werden kann. Diese Forderung bedingt eine gewisse Leistungsbegrenzung für das Einzel-Core auf etwa 250 $MW_{th}$.

Es wurde daher bereits ein abgewandelter Core-Typ beschrieben, der eine axiale Graphitsäule aufweist, um die herum kugelförmige Brennelemente etwa ringförmig angeordnet sind (s. K. Petersen u.a. "Efficiency of Inherent Protection Mechanisms for an Improved HTK Bafety Concept", Paper presented at the Specialists Meeting on Gascooled Reactor Safety and Licensing Aspects, Lausanne, 1. bis 3. September 1980). Ein solcher Hochtemperaturreaktor mit ringförmigem Core kann für eine Leistung von 350 $MW_{th}$ und mehr ausgelegt werden, sein Aufbau ist jedoch komplizierter und die Wahl des Durchmessers der Mittelsäule muß mit großer Sorgfalt getroffen werden, wobei zu beachten ist, daß über lange Zeiten hinweg Festigkeitsprobleme auf Grund der ständigen Einwirkung hoher Neutronenflüsse auftreten könnten.

Ein Aufbau der axialen Graphitsäule gemäß der LU-A-59 221 aus Graphitkugeln, die das Core durchwandern, würde zwar die genannten Festigkeitsprobleme beseitigen, nicht jedoch den Zwang zur sorgfältigen Festlegung des Säulendurchmessers für ein bestimmtes mittleres Leistungsverhalten, und es würden gleichzeitig neue Probleme infolge unterschiedlicher Kühlmitteltemperaturen durch die Leistungssenke innerhalb der Graphitsäule auftreten.

Aufgabe der Erfindung ist daher eine Verbesserung des Graphitkugelsäulenkonzepts im Hinblick auf eine gewisse Anpassungsfähigkeit bezüglich unterschiedlicher Lastbedingungen sowie die Ausschaltung von mechanischen problemen auf Grund von Temperaturunterschieden im das Core verlassenden Kühlmittelstrom.

Zur Lösung dieser Aufgabe ist der Hochtemperaturreaktor der eingangs genanntcn Art gemäß der Erfindung gekennzeichnet durch einen Graphitkugel-auslaß mit veränderbarem Abstand von der Kugelschüttung und/oder variabler Kugelauslaßrate zur Variation des Graphitkerndurchmessers und durch einen gesonderten, axialen Abzug von Kühlgas über das Kugelabzugsrohr oder einen axialen Durchlaß im Deckenreflektor und/oder Mittel zur Herbeiführung turbulenter Strömungen im Gasabzugsbereich zur Vermischung der axialen und koaxialen Teilströme.

Bei diesem Keaktortyp werden zusammen mit den Brennelementen zentral Graphitkugeln in das Core geschüttet, die sich als etwa säulenförmiger Kern darin sammeln und den aktiven Bereich durchwandern, bis sie zusammen mit den Brennelementkugeln am unteren Ende wieder abgezogen und durch einen geeigneten Sortiermechanismus wieder zurückerhalten werden.

Dabei ist der Durchmesser des Graphitkerns veränderbar, und zwar durch Veränderung der Höhe des Kugelauslasses über der Kugelschüttung und/oder durch Variation der Auslaßrate der Graphitkugeln. Die dadurch gegebene Flexibilität trägt zur Verbesserung der Keaktorsicherheit bei. Üblicherweise wird der Volumenanteil des Graphitkerns am Gesamtcore in der Gegend von etwa 5 bis 10 % liegen.

Die erfindungsgemäße Abwandlung des an sich bekannten Reaktors erfordert im übrigen keine durchgreifenden Veränderungen des Gesamtkonzepts, wie es z.B. aus dem Technischen Bericht ITB 78.2634.1 der GHT vom 1.10.1981 zu entnehmen ist.

Zweckmäßigerweise hat der Reaktor (z.B. sechs) von außen her in den Brennelementring vorragende Graphitnasen oder -vorsprünge, die eine weitere Ableitung von Nachwärme und zusätzliche Regelmöglichkeiten (innerhalb der Vorsprünge) bieten. Diese Vorsprünge kÖnnen gleichzeitig einer Absicherung der Deckensteine des Deckenreflektors dienen und reichen dann etwa bis zur Unterseite des Deckenreflektors.

Der Reaktor mit axialem Graphitkern aus Graphitkugeln wird insgesamt von Kühlgas durchströmt, und es ergibt sich in Anbetracht der axialen Leistungssenke ein relativ kalter Axialstrom, (dessen Anteil allerdings gering ist und bei etwa 5 % liegen wird) umgeben von einer heißeren Ringströmung. Man kann nun entweder bei abwärts gerichteter Gasströmung das axiale "Kaltgas" gesondert über das Kugelabzugsrohr am unteren Ende abführen, das ohnehin eine gewisse Kühlgasströmung benötigt, oder es können Mittel (wie eine Mehrfachumlenkung der Strömung in den achsnahen Abzugsrohren) zur Herbeiführung einer turbulenten Strömung im Gasabzugsbereich vorgesehen werden, die zu einer Vermischung der axialen und koaxialen Teilströme führen. Man kann selbstverständlich auch beide Maßnahmen gleichzeitig ergreifen.

Bei aufwärts gerichteter Gasströmung kann man das axiale "Kaltgas" gesondert über einen Durchlaß in der Mitte des Deckenreflektors zum Gebläse ableiten.

Der (übrige) Gasstrom kann auch hier ggf.

zusätzlich durch Mittel zur Herbeiführung einer turbulenten Strömung im Deckenreflektor gemischt werden.

Eine schematische Darstellung des erfindungsgemäßen Reaktorkonzepts wird durch die angefügten Zeichnungen veranschaulicht, von denen

Figur 1 einen Axialschnitt durch den Corebereich eines Reaktors mit abwärts gerichteter Gasströmung,

Figur 2 einen Axialschnitt durch den Corebereich eines Reaktors mit aufwärts gerichteter Gasströmung,

Figur 3 einen Schnitt senkrecht zur Achse durch Core und Reflektor mit Teil-Aufsicht auf den Deckenreflektor und

Figur 4 die Abstützung der Deckensteine zeigt.

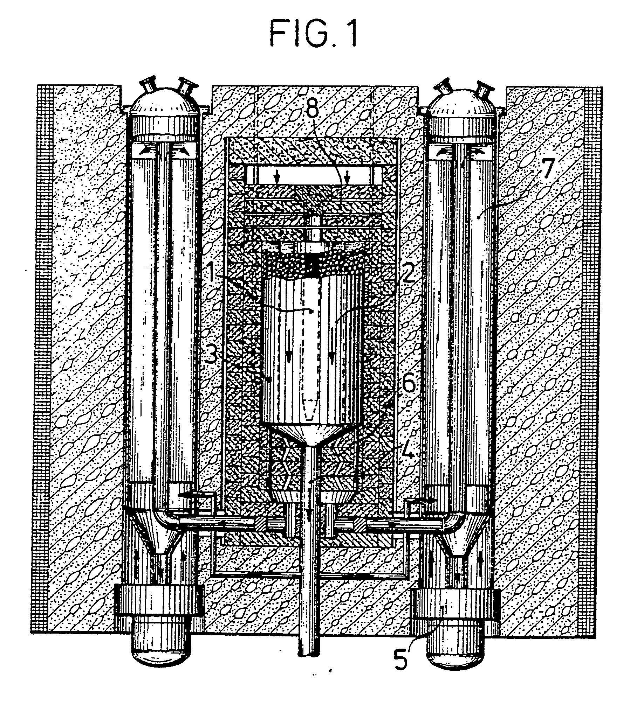

Gemäß Figur 1 umfaßt das Core des Reaktors einen Graphitkern 1 aus Graphitkugeln, der von einem Ring 2 aus Brennelementen umgeben wird, in den Graphitnasen 3 vorragen. Das axiale Kühlgas gelangt über das Kugelabzugsrohr 4 direkt zum Gebläse 5, während das heißere Gas aus dem ringförmigen Bereich über Leitungen bzw. Kanäle 6 in die Dampferzeuger 7 strömt.

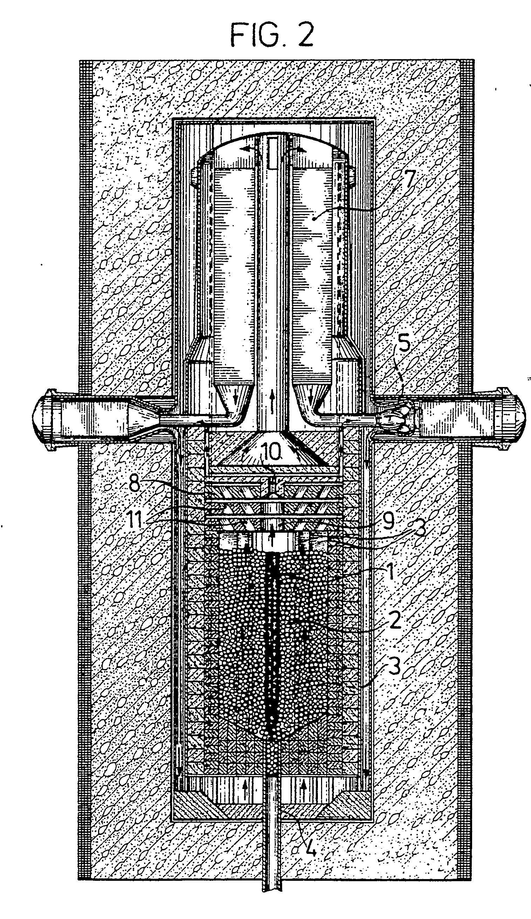

Bei der in Figur 2 gezeigten Anordnung strömt Kühlgas aufwärts durch das Core. Der axiale kältere Gasstrom gelangt direkt über eine im Deckenreflektor 8 vorgesehene Öffnung 9 (ggf. mit einer Verengung 10) zu den Gebläsen 5, während das übrige Gas über versetzte Durchlässe 11 (mit entsprechender Mischwirkung) zu den Dampferzeugern strömt. Ggf. können Regelmöglichkeiten für den Axialstrom oberhalb des Reflektors vorgesehen werden.

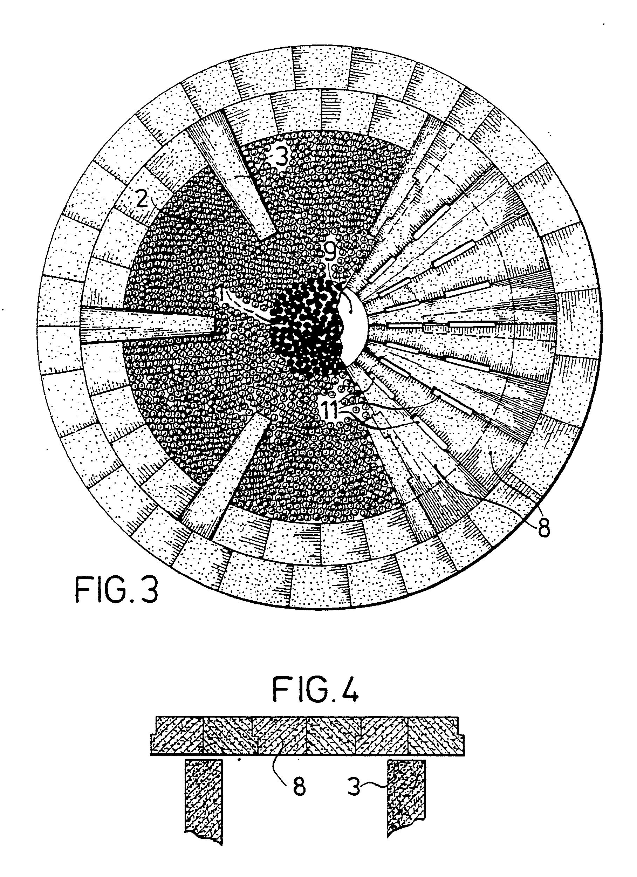

Figur 3 zeigt sechs radiale Graphitnasen oder - vorsprünge 3, die in den ringförmigen Bereich 2 vorragen, der von Brennelementen eingenommen wird, die koaxial den aus Kugeln gebildeten Graphitkern umschließen. Im rechten Drittel der Figur erkennt man die axiale Öffnung 9 und die Durchlässe 11 des Deckenreflektors.

Die sechs Graphitnasen 3 tragen, wie in Figur 4 angedeutet ist, die 24 Deckensteine des Deckenreflektors 8.

Ein Reaktor der boschriebenen Art mit axialem Graphitkugelkern und sechs Graphitnasen kann für Leistungen von 500 bis 600 MW$_{th}$ ausgelegt werden.

**Patentanspruch:**

1.- Hochtemperatur-Kernreaktor mit kugelförmigen Brennelementen, die etwa ringförmig um einen Graphitkern angeordnet sind, der durch eine Schüttung von Graphitkugeln gebildet ist,
gekennzeichnet durch
einen Graphitkugelauslaß mit veränderbarem Abstand von der Kugelschüttung und/oder variabler Kugelauslaßrate zur Variation des Graphitkerndurchmessers und durch einen gesonderten, axialen Abzug von Kühlgas über das Kugelabzugsrohr (4) oder einen axialen Durchlaß (9) im Deckenreflektor (8) und/oder Mittel zur Herbeiführung turbulenter Strömungen im Gasabzugsbereich zur Vermischung der axialen und koaxialen Teilströme.

**Claim:**

1. High-temperature nuclear reactor with spherical fuel elements, which are arranged substantially in a ring formation about a graphite core formed by a bed of graphite pebbles, characterised by a graphite pebble outlet with variable spacing from the pebble bed and/or variable pebble outlet rate for variation of the graphite core diameter, and by a separate axial discharge of cooling gas by way of the pebble discharge tube (4) or an axial passage (9) in the roof reflector (8) and/or means for bringing about turbulent flows in the gas discharge region for mixing the axial and coaxial part-flows.

**Revendication**

Réacteur nucléaire à haute température à éléments combustibles en forme de boulets disposés à peu près annulairement autour d'un coeur en graphite formé d'un amoncellement de boulets de graphite, caractérisé par une sortie pour les boulets de graphite, dont la distance à l'amoncellement de boulets peut être modifiée et/ou par une vitesse variable de sortie des boulets pour faire varier le diamètre du coeur en graphite et par une évacuation axiale distincte du gaz de refroidissement par le conduit (4) d'évacuation des boulets ou par un passage (9) axial dans le réflecteur de plafond (8) et/ou par des moyens destinés à provoquer des écoulements turbulents dans la région d'évacuation du gaz pour mélanger les courants partiels axial et coaxial.

# FIG. 1

# FIG. 2

FIG.3

FIG.4